# EUROPEAN PATENT SPECIFICATION

(11) **EP 1 130 455 B1**
(45) Date of publication and mention of the grant of the patent: **08.06.2005**
(21) Application number: 01104460.9
(22) Date of filing: 28.02.2001
(51) Int. Cl.: G02F 1/1343, G02F 1/1333, G02F 1/1368

(54) **Liquid crystal display**
Flüssigkristallanzeige
Dispositif d'affichage à cristal liquide

(30) Priority: 29.02.2000 JP 2000054840; 04.04.2000 JP 2000102790
(43) Date of publication of application: 05.09.2001
(73) Proprietor: SONY CORPORATION, Tokyo 141 (JP)
(72) Inventor: Tsuboi, Hisanori, Shinagawa-ku, Tokyo (JP); Abe, Fumiaki, Shinagawa-ku, Tokyo (JP); Uchino, Katsuhide, Shinagawa-ku, Tokyo (JP); Noda, Kazuhiro, Shinagawa-ku, Tokyo (JP); Sugita, Hideshi, Kokubu-shi, Kagoshima-ken (JP); Hagita, Tadahiro, Kokubu-shi, Kagoshima-ken (JP); Fukumori, Hiromi, Kokubu-shi, Kagoshima-ken (JP); Shima, Syuichi, Shinagawa-ku, Tokyo (JP); Kaise, Kikuo, Shinagawa-ku, Tokyo (JP)
(74) Representative: Müller - Hoffmann & Partner

(56) References cited:
- US-A- 6 011 604
- LIEN A, JOHN R A: "Lateral field effect in twisted nematic cells" IBM J. RES. DEVELOP., vol. 36, no. 1, February 1992 (1992-02), pages 51-58, XP002253272
- HO W H, PAN C J, WU H H: "Improve product aperture ratio by controlling magnitude of reverse tilt domain" PROC. SPIE - INT. SOC. OPT. ENG. (USA), PROCEEDINGS OF THE SPIE - THE INTERNATIONAL SOCIETY FOR OPTICAL ENGINEERING (DISPLAY TECHNOLOGIES III, TAIPEI, TAIWAN), vol. 4079, 26 - 27 July 2000, pages 264-267, XP009016620
- PATENT ABSTRACTS OF JAPAN vol. 017, no. 157 (P-1511), 26 March 1993 (1993-03-26) & JP 04 323625 A (SONY CORP), 12 November 1992 (1992-11-12)

## Description

### BACKGROUND OF THE INVENTION

### 1. Field of the Invention

The present invention relates to a liquid crystal display apparatus having a plurality of pixel electrodes formed in a matrix pattern, and using switching devices such as thin film transistors (TFTs).

### 2. Description of the Related Art

A conventional matrix addressed-type liquid crystal display apparatus using switching devices such as TFTs is provided with a liquid crystal cell sandwiched between two sheets of polarizers, in which the liquid crystal cell itself is comprised at least of: a pair of transparent glass substrates disposed so as to oppose to each other; a transparent common electrode disposed on an opposing surface of one of the pair of the transparent glass substrates, and covered with an orientation film; a plurality of transparent pixel electrodes disposed in a matrix pattern on an opposing surface of the other one of the pair of the transparent glass substrates, and covered with an orientation film; TFTs each connected to each pixel electrode as a switching device; and a twisted nematic (TN) liquid crystal sealed between the two opposed orientation films. This type of liquid crystal cell is generally referred to as a twisted nematic liquid crystal display (TN-LCD).

By way of example, when applying a voltage to the pixel electrodes disposed in a matrix pattern, there is widely used such a method as the line reverse drive method whereby a voltage to be applied is reversed per each line or the column reverse drive method whereby a voltage to be applied is reversed per each column in order to be able to improve the quality of display.
These drive methods, however, have such a problem that due to a reversed application of voltage between adjacent pixel electrodes, there arises a reverse tilt domain 61, the tilt direction of which is reverse to a pre-tilt direction which is originally given to the liquid crystal, in a portion within a pixel which is arranged corresponding to each pixel electrode 62 as shown in FIG. 6 (refer to Japan Patent Publication No. 2934875, being a basic application of USP 5,781,260 and USP 6,011,604, col. 5-6). In particular, in a normally-white mode liquid crystal display, there occurs a problem that a disclination line 63 which is located at a boundary between a normal region and the reverse tilt domain 61 is caused to have a white stripping defect thereby deteriorating contrast. Thereby, in order to reduce the region of the reverse tilt domain 61, there has been practiced to increase its tilt angle. However, this causes a problem to drop the yield at the time of manufacture. Further, in order to minimize light leakage therefrom, a shade material is disposed corresponding to a portion where reverse tilt domain 61 is formed. However, this causes a problem to drop a numerical aperture.

Thereby, as one of the methods to be able to increase a contrast ratio in the TN-LCD, it is considered promising to increase an effective voltage to be applied across its common electrode and pixel electrode which are disposed opposingly (i.e., to broaden its dynamic range). In such a case in which the effective voltage to be applied across the common electrode and the pixel electrode opposing to each other is increased, there are such advantages that the orientation of liquid crystal molecules becomes more perpendicular, and in addition that because the position of occurrence of disclination line 63 is shifted toward a peripheral (outer) direction within the pixel, the contrast ratio can be improved.

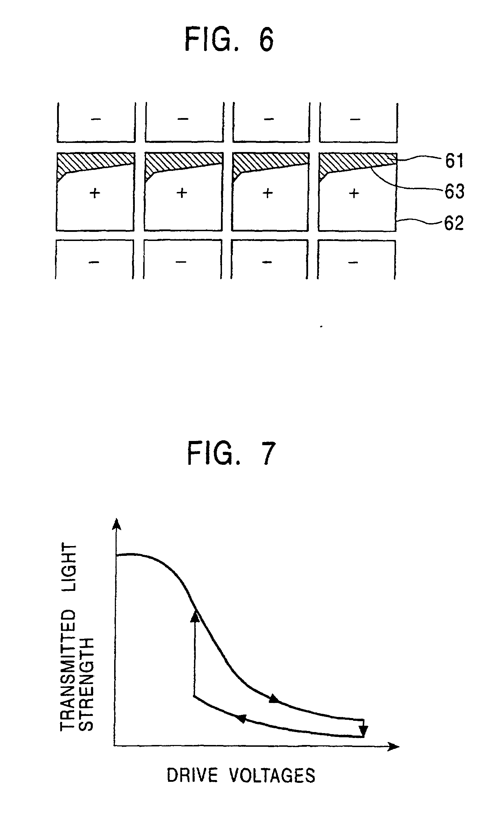

However, if this effective voltage is increased substantially, the reverse tilt domain will disappear in a part of the pixels, and because this disappearance of the reverse tilt domain in the part thereof will become a quasi-stable state, there occurs a hysteresis in V (Voltage)-T (Transmitted light strength) characteristics (refer to FIG. 7). Thereby, a significant deterioration in quality of display occurs resulting from a display defect like a dead pixel at the time of switching from black to half tone displays, or in particular, resulting from a display defect like a dead line which is caused by propagation of a display defect due to arbitrary reverse tilt domain to its adjacent reverse tilt domain. Therefore, it has not been possible to apply an effective voltage in excess of a predetermined value across the common electrode and the pixel electrode which are opposed to each other, thereby failing to realize a desired contrast ratio. These problems described above become more significant when a gap between juxtaposed pixel electrodes is reduced in order to realize a liquid crystal display device having a high resolution and a high numerical aperture. Therefore, in the matrix-addressed type liquid crystal display apparatus provided with switching devices such as TFTs, it has been difficult to accomplish a high numerical aperture and a high contrast ratio simultaneously.

Document LIEN A, John R A: "Lateral field effect in twisted nematic cells" IBM J. RES. DEVELOP., vol. 36, no. 1, February 1992, pages 51-58, teaches that the lateral field effects in an ON state of a TN-type liquid crystal display resulting in an undesired reversed tilt domain in each pixel are dependent on various cell parameters such as pretilt angle, cell gap thickness, bus-line-to-pixel-spacing, and the like.

### SUMMARY OF THE INVENTION

The present invention has been contemplated to solve the above-mentioned problems associated with the prior art. An object of the invention, therefore, is to provide for a matrix-addressed type liquid crystal display apparatus provided with switching devices such as TFTs, wherein its effective voltage is substantially increased without causing hysteresis to occur in the V-T characteristics, namely, to be able to increase a value of applicable voltage, in excess of which a display defect starts to occur, thereby enabling both a high numerical aperture and a high contrast ratio to be achieved simultaneously, and further providing for a method of manufacture of the same.

In order to ensure for a high numerical aperture and a high contrast ratio to be achieved simultaneously, i.e., to be able to achieve both of them coincidently in the matrix-addressed type liquid crystal display apparatus having switching devices such as TFTs, the inventors of the present invention have discovered that it is effective to minimize an interaction occurring between a reverse tilt domain that is formed within a pixel arranged corresponding to an arbitrary pixel electrode and an adjacent reverse tilt domain that is formed within an adjacent pixel arranged corresponding to an adjacent pixel electrode, more particularly that it is preferable to separate respective juxtaposed reverse tilt domains physically from each other, i.e., to space apart respective juxtaposed reverse tilt domains at a distance which is broader than a minimum gap between juxtaposed pixel electrodes corresponding thereto, otherwise that it is effective to reduce a thickness (between the opposed orientation films) of the liquid crystal cell in a portion sandwiched between juxtaposed reverse tilt domains thinner than a thickness of the liquid crystal cell in a portion of the pixel so that a degree of overlap between respective cross-sections of juxtaposed reverse tilt domains in the direction of thickness is minimized.

According to one aspect of the present invention, a liquid crystal display apparatus is provided with a liquid crystal cell which is at least comprised of: a pair of substrates disposed so as to oppose each other; a common electrode which is provided on one of the pair of substrates, and covered with a first orientation film; a plurality of pixel electrodes disposed in a matrix pattern on the other of the pair of substrates, and covered with a second orientation film; a plurality of switching devices each of them connected to a pixel electrode respectively; and a liquid crystal which is sealed in a space sandwiched between the first and second orientation films provided on the pair of substrates so as to form a liquid crystal layer, wherein:
a gap between reverse tilt domain portions of two adjacent pixels is arranged to be broader than a minimum gap between corresponding adjacents pixel electrodes, or a thickness of a portion of said liquid crystal layer located between reverse tilt domain portions of two adjacents pixels is arranged to be thinner than a portion of said liquid crystal layer in a portion of the pixel.

In order to broaden the gap between the adjacent reverse tilt domains than the minimum gap between the juxtaposed pixel electrodes, it is preferable to set a width of the pixel electrode at said reverse tilt domain portion of a corresponding pixel along a longitudinal direction of said reverse tilt domain narrower than a width of the pixel electrode in a portion in which no reverse tilt domain is formed. Thereby, the adjacent reverse tilt domains can be separated farther from each other in the longitudinal directions. Alternatively, respective pixel electrodes may be laterally displaced in a zigzag or staggered pattern like hound's tooth to the same effect. Thereby, the adjacent reverse tilt domains can be separated farther from each other in the directions orthogonal to the longitudinal direction thereof.

Further, in order to set the thickness of the liquid crystal layer sandwiched in the portion between adjacent reverse tilt domains thinner than the thickness of the liquid crystal layer sandwiched in the portion of the pixel, preferably a barrier portion is formed in the region of the adjacent reverse tilt domains so that the thickness of the liquid crystal layer therein is reduced. For example, such a barrier portion can be formed when perforating a contact hole into a planar film, which is normally formed prior to forming the pixel electrodes. However, it is not limited thereto, and any other modifications thereof can be provided within the scope of the invention.

Still further, according to another aspect of the invention, a method of fabricating a substrate on the side of switching devices for use in the liquid crystal display apparatus of the invention is provided, comprising the following steps (a)-(e):
(a) forming a first layer-insulation layer on its substrate, forming a thin film of Si layer for forming a transistor thereon, forming an oxide film on the surface thereof, constructing a thin film transistor by forming a gate electrode and a Cs electrode thereon, and further forming second layer-insulation layer on the thin film transistor;
(b) forming an antireflection film on an entire area of the second layer-insulation layer;
(c) perforating a contact hole through the antireflection film and the second layer-insulation layer to the thin film of Si layer;
(d) forming a first wiring layer into the contact hole; and further
(e) a process including the steps of: forming a third layer-insulation layer on an entire area thereof; forming a passivation film; then, removing the passivation film by etching corresponding to a contact hole portion and a pixel aperture portion; removing the third layer-insulation layer by etching corresponding to the contact hole portion; forming a second wiring layer therein; forming a planar organic film on an entire area thereof; then perforating a contact hole corresponding to a pixel electrode into the planar organic film; and forming a pixel electrode thereon in such a manner that a gap between reverse tilt domain portions of two adjacent pixels is arranged to be broader than a minimum gap between corresponding adjacent pixel electrodes otherwise:
   at the time of perforating the contact hole for the pixel electrode in the planar organic film prior to forming the pixel electrode thereon, fabricating the planar organic film so that a thickness of a portion of said liquid crystal layer located between reverse tilt domain portions of two adjacent pixels is arranged to be thinner than a portion of said liquid crystal layer in a portion of the pixel.

### BRIEF DESCRIPTION OF DRAWINGS

Other features and advantages of the present invention will become apparent from the following description taken in connection with the accompanying drawings, in which:
FIG. 1 is a schematic diagram in cross-section of a liquid crystal cell of a liquid crystal display apparatus (LCD) of the present invention;
FIGS. 2A to 2C are schematic plan views of pixel electrodes in a liquid crystal cell for use in the LCD of the present invention;
FIGS. 3A to 3C are schematic plan views of pixel electrodes in a liquid crystal cell for use in the LCD of the present invention;
FIGS. 4A to 4B are plan views of the liquid crystal cell for use in the LCD of the present invention;
FIGS. 5A to 5C show a relationship of a distance between juxtaposed pixel electrodes versus an effective voltage in the liquid crystal cell for use in the LCD of the present invention;
FIG. 6 depicts each reverse tilt domain generated in a prior art liquid crystal cell;
FIG. 7 depicts an example of hysteresis occurred between transmitted light strengths versus drive voltages in the prior art liquid crystal cell; and
FIGS. 8A to 8E depict a process flow of manufacturing a TFT substrate for use in the present invention.

### A PREFERRED EMBODIMENT OF THE INVENTION

A preferred embodiment of the invention will be described in the following with reference to the accompanying drawings.

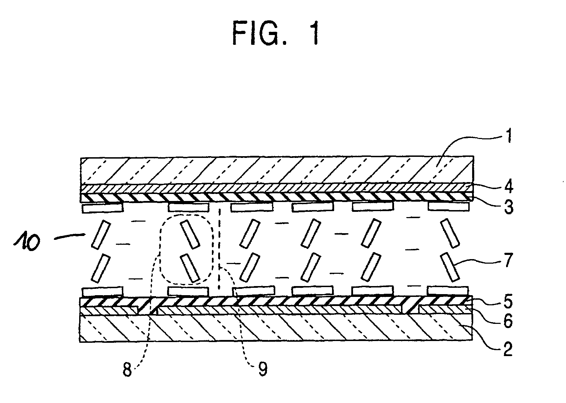

A liquid crystal display element according to the present invention is provided with a liquid crystal cell which is sandwiched between two sheets of polarizers, and this liquid crystal cell itself is comprised at least of: a pair of transparent glass substrates (an upper substrate 1 and a lower substrate 2); a common electrode 4 provided on a bottom surface (opposing surface) of the upper substrate 1, and covered with an orientation film 3; a plurality of transparent pixel electrodes 6, which are arranged in a matrix on an upper surface (opposing surface) of the lower substrate 2, and covered with an orientation film 5; a TFT (not shown) connected to each pixel electrode as its switching device; and twisted nematic liquid crystals 7 sealed in a space between the orientation films 3 and 5, twisted continuously approximately 90° therebetween, and forming a liquid crystal layer (10) as shown in FIG. 1.

In such a liquid crystal cell, there are formed scanning lines and signal lines (not shown) in a matrix on the upper surface (opposing surface) of the lower substrate 2, and each pixel electrode 6 is connected via a corresponding TFT to the scanning line and signal line, respectively. In this liquid crystal cell, a reverse tilt domain 8 is univocally formed, relative to a disclination line 9 which is its boundary, depending on its orientation treatment direction and its voltage drive method adopted (whether the line reverse drive method or the column reverse drive method is used).

In the liquid crystal display apparatus of the present invention, in order for a high numerical aperture and a high contrast ratio to be achieved simultaneously by minimizing an interaction between adjacent reverse tilt domains each formed within a pixel arranged corresponding to an arbitrary pixel electrode, a gap between adjacent reverse tilt domains is increased broader than a minimum gap between juxtaposed pixel electrodes, or a thickness of the liquid crystal layer in a portion between adjacent reverse tilt domains (i.e., a depth thereof between the opposed orientation films) is reduced shallower than a thickness of the liquid crystal layer in the other portion of the pixel.

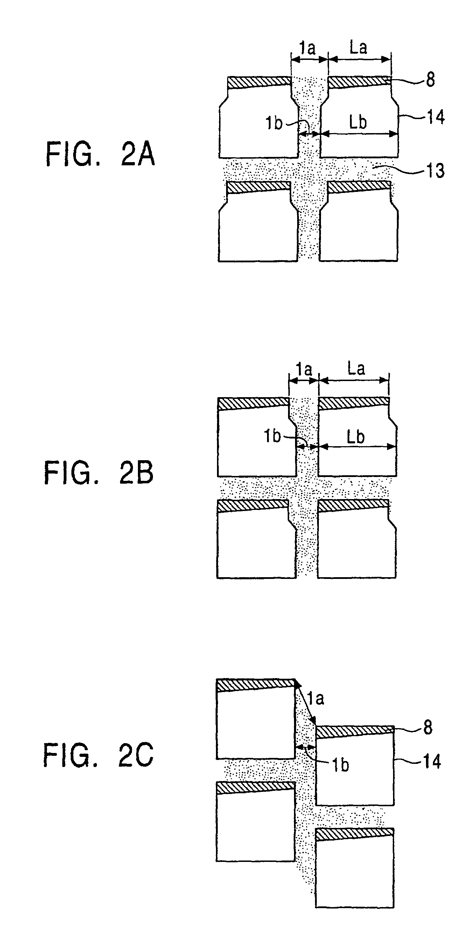

FIGS. 2A and 2B show specific methods for broadening gap la between adjacent reverse tilt domains broader than minimum gap 1b between adjacent pixel electrodes, wherein in order for adjacent reverse tilt domains to be separated from each other in longitudinal directions, a width of pixel electrode La (which corresponds to a width of a region of a reverse tilt domain 8 in a longitudinal direction thereof) in a pixel electrode 14 enclosed by a shadow region 13 is set narrower than a width Lb of the pixel electrode in a portion corresponding to its normally-tilt domain in which no reverse tilt domain 8 is formed. Further, as shown in FIG. 2C, in order to separate them in a direction orthogonal to the longitudinal direction as well, pixel electrodes 14 may be arranged in a staggered pattern like hound's tooth check. In the case of FIG. 2C, because an overlap region in cross-section between opposing end portions of adjacent reverse tilt domains 8 is reduced also, an effect further to reduce the interaction between adjacent reverse tilt domains 8 is expected to be achieved.

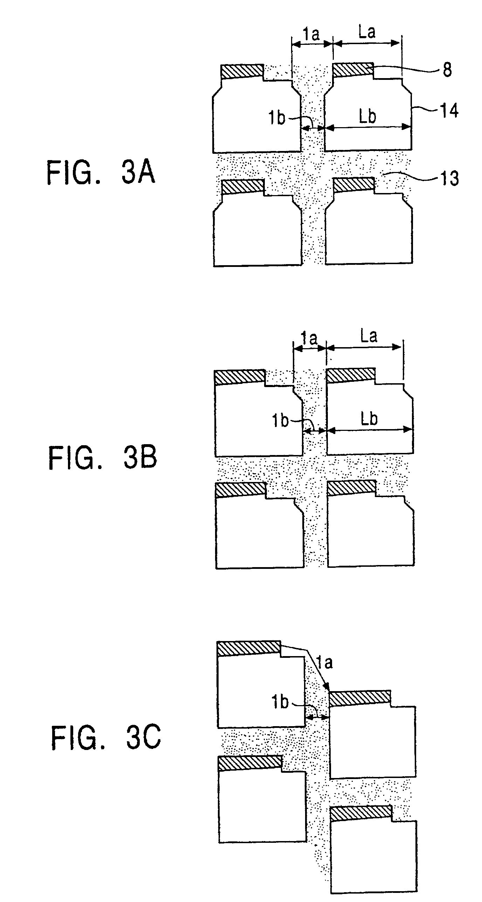

Still further, according to the knowledge and understanding by the inventors of the present invention, it is learned that there exists a close relationship between an effective voltage applicable across the common electrode and the pixel electrode disposed so as to oppose to each other and a gap between juxtaposed pixel electrodes in an orthogonal direction to the longitudinal direction of the reverse tilt domain, and if this gap is broadened, the effective voltage applicable can be increased also. However, it should be noted that if this orthogonal gap is merely broadened, an area of the shadow region would be broadened thereby failing to realize the high numerical aperture aimed at by the present invention. Therefore, as regard to the embodiment as shown in FIGS. 2A to 2C, it is preferable for the gap between the adjacent pixel electrodes to be broadened partially also in the orthogonal direction relative to the longitudinal direction of the reverse tilt domain as shown in FIGS. 3A to 3C, respectively. In this instance, a portion preferred for broadening the gap is a portion of the pixel electrode on one side thereof corresponding to one end of reverse tilt domain 8 having a smaller cross-section as shown in FIGS. 3A to 3C in order to maintain a high numerical aperture and to cause an asymmetrical generation of the reverse tilt domains. However, it is not limited thereto, and the gap may be expanded by cutting away at a position corresponding to the middle of the reverse tilt domain. As for its size (depth and width) to be expanded may be determined appropriately in consideration of a required numerical aperture and so on.

Still further, as a concrete method for setting the thickness of the liquid crystal layer sandwiched within between adjacent reverse tilt domains thinner than the thickness of the liquid crystal layer in the pixel portion, a barrier portion (not shown) may be formed for reducing the thickness of the liquid crystal layer sandwiched between the adjacent reverse tilt domains. This barrier portion may be formed as a convex or elevated part on the substrate at the time of forming switching devices such as TFT elements, or a barrier structure may be formed after the formation of the orientation film, thereon by printing or dispensing processes.

The liquid crystal to be used here is preferably twisted nematic liquid crystals the major axis of liquid crystal molecules of which is continuously twisted approximately 90° between the opposed orientation films. Further, the liquid crystal cell is preferably provided with a black matrix for shading at least a part of the periphery of each pixel portion. A thickness of the liquid crystal cell in the pixel portion is preferably 4µm or less. Further, a size of the pixel electrode is preferably 5µm²-50µm².

### EXAMPLES:

Examples of the preferred embodiments of the invention will be described more specifically with reference to the accompanying drawings (in which a width of the pixel electrode corresponding to the region of the reverse tilt domain is narrowed than the width thereof corresponding to the region of the normal tilt domain).

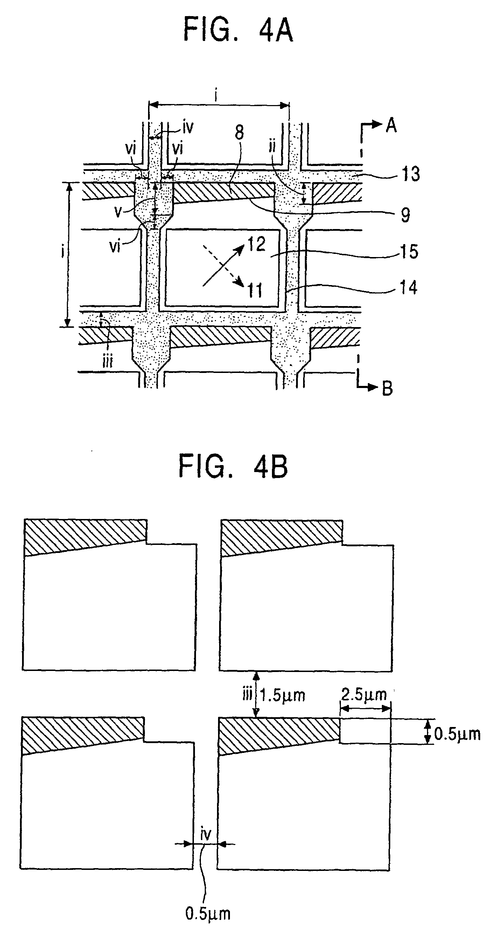

FIG. 4A is an example of plan views as seen from the above of a TN-LCD portion of a liquid crystal display apparatus of the present invention, however, its TFTs, signal lines and scanning lines are not shown. By way of example, a cross-section cut out along the line A-B in FIG. 4A is the same as that of FIG. 1.

In TN-LCD shown in FIG. 4A, a dotted arrow 11 and a solid arrow 12 depict directions of orientation processing (directions of rubbing) on the lower substrate and the upper substrate, respectively. In the shadow region 13, there are provided a signal line, a scanning line, an auxiliary capacitance electrode, and a TFT. Further, an aperture portion 15 is formed corresponding to the pixel electrode 14 formed on the lower substrate. The pixel electrode 14 is connected via the TFT to the signal line and the scanning line provided in the shadow region 13. A method adopted here for applying voltage to the pixel electrode 14 is a line reverse drive method which reverses a drive voltage per each line.

Further, a thickness of the liquid crystal layer in the pixel portion corresponding to the pixel electrode 14 (i.e., a depth in a direction between the opposing orientation films) is set at 3.5µm. Anti-clockwise nematic liquid crystal is sealed between the upper and the lower substrates. The liquid crystal used here has a refraction anisotropy Δn of approximately 0.13, and dielectric constant anisotropy Δ ε of approximately 10. Further, polyimide films each having a pretilt angle of approximately 5° are used as the orientation films.

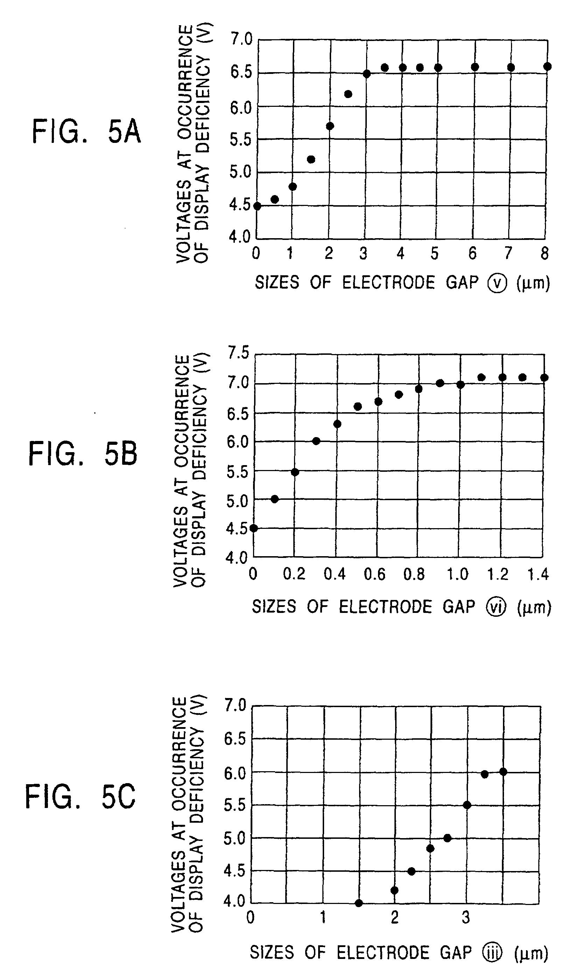

In TN-LCD of FIG. 4A, a pixel pitch i is set at 20µm, a pixel electrode gap iii in a vertical direction in the figure is set at 1.5µm, and a minimum electrode gap iv between adjacent pixel electrodes in a horizontal direction is set at 1.5µm. Then, a relationship between a drive voltage in excess of which a display defect will appear and an electrode gap v extended in the vertical direction or an electrode gap vi extended in the horizontal direction in its portion corresponding to the region of reverse tilt domain 8 is studied, respectively. Here, FIG. 5A shows a relationship between drive voltages in excess of which display defect appears and the electrode gap v which is varied while maintaining the electrode gap vi at 0.5µm, and FIG. 5B shows a relationship between drive voltages in excess of which display defect appears and electrode gap vi which is varied while maintaining the electrode gap v at 3.5µm.

It is known from FIG. 5B that by broadening the electrode gap vi, a drive voltage (effective voltage) in excess of which display defect starts to appear can be raised. Further, it is known from FIG. 5A that by broadening the electrode gap v, a drive voltage (effective voltage) in excess of which display defect starts to appear can be raised. In this case, the electrode gap v is not necessary to extend in excess of 3.5µm. As a result of observed positions of disclination line 9 in this liquid crystal cell, a width ii of the reverse tilt domain was found to be 3.0µm. Thereby, it is known from FIG. 5A that when the electrode gap v extends more than the width ii of the reverse tilt domain, the drive voltage which is free from causing the display defect to appear will saturate.

Even in the TN-LCD as described above in which the distance between adjacent pixel electrodes was designed to become minimum in order to realize a high numerical aperture, if the pixel electrode patterning proposed by the present invention is adopted, a large drive voltage becomes applicable. More specifically, in this example, when the electrode gap v is set at 3.5µm and the electrode gap vi is set at 0.5µm, its drive voltage free from causing any display defect is improved from 4.5V to 6.6V thereby enabling a high contrast to be achieved.

Further, in a case where the electrode gap iv is set at 1.5µm, and the electrode gaps v and vi are set at 0 µm (in a case of a square pixel electrode), its diagram indicating a relationship between the electrode gap iii and the drive voltages free from causing display defect is shown in FIG. 5C. It is known from FIG. 5C that if the electrode gap iii is increased, its drive voltage (effective voltage) free from causing display defects can be raised. More specifically, in reference to FIG. 4B, assuming that the electrode gap iii to be 1.5µm and the electrode gap iv to be 0.5µm, when a portion of the electrode gap iii is further expanded as much as by an area of 2.5µm (width) × 0.5µm (height), its drive voltage free from causing display defects is improved from 5.0V to 5.5V, thereby enabling a high contrast to be achieved. Therefore, it is known from the above that it is also preferable for the shape of the pixel electrode in the portion corresponding to the reverse tilt domain to be fabricated to have a cut-out portion not only in the horizontal direction but also in the vertical direction.

In addition, the liquid crystal display apparatus of the present invention also can use a non-linear element such as Metal-Insulation-Metal (MIM) and the like as its switching devices instead of TFTs. Further, the directions of rubbing at orientation processing, and twist angles of the liquid crystal described above are not limited thereto, and any other modifications can be applied within the scope of the invention. Still further, the advantages of the present invention can be applied also to a color display, a transmission type monochrome display, or a reflection type TN-LCD. Furthermore, the above-mentioned pretilt angle of 5° in the orientation films is not limited thereto.

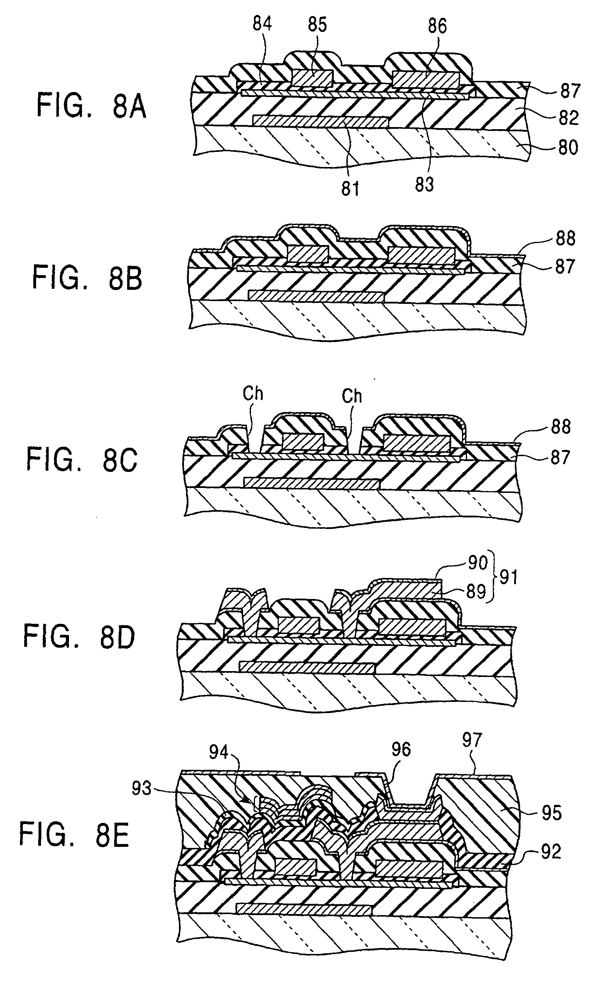

Now, with reference to FIGS. 8A to 8E, a method of manufacturing a TFT substrate for use in the liquid crystal display apparatus of the present invention will be described according to respective steps in the following.

### STEP A: (FIG. 8A)

Firstly, on a surface of an insulating transparent substrate 80 such as a glass substrate or the like, a 50 nm thick film of poly-Si is formed by the low pressure chemical vapor deposition method (LP-CVD), on which a film of WSi is formed in 200 nm thickness, which is then patterned to form a multi-layered shadow film 81.

Upon this, a film of SiO₂ in 600nm thickness is formed as an interlayer-insulation film 82 by the atmospheric pressure chemical vapor deposition method (AP-CVD). Subsequently, a thin film Si layer is grown to be 75 nm thick by LP-CVD for forming a transistor, then its crystal grains are grown by heat treatment or the like and patterned to form an Si layer 83. After that, by oxidizing the surface of the Si layer 83 an oxide film 84 is formed thereon, then for controlling a threshold voltage, a p-type impurity substance (B) is ion-implanted at a low density in an entire surface thereof.

Then, by masking a transistor portion, an n-type impurity substance (As) is ion-implanted at a high density exclusively in a Cs (Capacitance) portion to form an electrode, further on which, a second Si layer which becomes a gate electrode or Cs electrode is formed by LP-CVD, then subjected to a heat treatment in a gas such as POCl₃ so that phosphorus atoms are diffused to provide for a low resistivity, then the same is patterned to form a gate electrode 85 and a Cs electrode 86.

Then, for the purpose of forming an n-MOS, an n-type impurity substance (As) is ion-implanted at a high density after masking a p-MOS formed portion. Subsequently, for forming the n-MOS, after masking the pixel transistor portion and the n-MOS portion in the circuit, a p-type impurity substance (B) is ion-implanted at a high density. Then, an interlayer-insulation film 87 such as phosphorus silicate glass is formed to a thickness of 600 nm by AP-CVD, followed by a heat treatment to recover the crystalline property of the ion-implanted portion.

### STEP B: (FIG. 8B)

In the next step B, a TiON layer 88 for prevention of reflection is formed on the whole area of the interlayer-insulation film 87 by sputtering to a thickness of 35 nm.

### STEP C: (FIG. 8C)

Further, in step C, after masking portions other than contact holes, the TiON layer 88 and the interlayer-insulation film 87 in the contact hole portion are etched to provide for a contact hole Ch.

### STEP D: (FIG. 8D)

In the next step D, a 500nm thick Al-1%Si layer 89 and a 60nm thick TiON layer 90 are continuously formed thereon by sputtering, then after masking a wiring portion by photolithography, a three-layer structured wiring of TiON/AlSi/TiON is patterned by dry-etching to form a wiring layer 91.

The 35 nm thick TiON layer 88 in the lower direction can efficiently absorb rays of light having a wavelength from 400nm to 450nm, and the 60nm thick TiON layer 90 in the upper direction also functions as a stopper in a subsequent contact hole etching.

### STEP E: (FIG. 8E)

Further, in the step E, an interlayer-insulation film 92 such as a phosphorus silicate glass is grown by AP-CVD to 400 nm thick, and further, a 200nm thick passivation film 93 of SiN is formed by the plasma CVD thereon. After etching the SiN film 93 on the contact hole portion, a pixel aperture portion and a PAD portion, the 400nm thick interlayer-insulation layer 92 is perforated for the contact hole portion and the PAD portion. After that, in the same manner as in the above step D, a metal film of a TiON/AlSi/TiON structure is formed, and patterned to provide for a wiring layer 94.

After recovery of transistor characteristics by heat treatment, an organic film 95 for planarization is coated, and then a pixel electrode contact hole 96 and PAD are perforated. Finally, ITO (Indium-Tin-Oxide) for use as a pixel electrode is formed by sputtering to a thickness of 70nm, which is then patterned so as to satisfy the specified conditions according to the present invention and to provide for the pixel electrode 97. Thereby, the TFT substrate to be used in the present invention is accomplished.

According to the features and advantages of the present invention, because that the distance between adjacent reverse tilt domains each formed in a portion of the pixel arranged corresponding to arbitrary pixel electrode is allowed to be broader than the gap between the juxtaposed pixel electrodes, or that the thickness of the liquid crystal layer sandwiched in the portion of the reverse tilt domain is allowed to be thinner than the thickness thereof in the portion of the pixel, the adverse interaction occurring between the adjacent reverse tilt domains can be suppressed effectively. Therefore, the liquid crystal display apparatus of the invention, which is capable of applying a high drive voltage without causing display defects, ensures a high numerical aperture and high contrast ratio to be achieved at the same time.

## Claims

1. A liquid crystal display apparatus having a liquid crystal cell comprising:
a pair of substrates (1, 2) disposed so as to oppose to each other;
a common electrode (4) which is provided on one of said pair of substrates, and covered with a first orientation film (3);
a plurality of pixel electrodes (6) which are disposed in a matrix on the other of said pair of substrates, and covered with a second orientation film (5);
a plurality of switching devices, each of them connected to a pixel electrode, respectively; and
a liquid crystal which is sealed between said first and second orientation films on said pair of substrates so as to form a liquid crystal layer, wherein:
a gap (1a) between reverse tilt domain portions (8) of two adjacent pixels is arranged to be broader than a minimum gap (1b) between corresponding adjacent pixel electrodes, or a thickness of a portion of said liquid crystal layer located between reverse tilt domain portions of two adjacent pixels is arranged to be thinner than a portion of said liquid crystal in a portion of the pixel.

2. The liquid crystal display apparatus according to claim 1, wherein a width of a pixel electrode (6) at said reverse tilt domain portion of a corresponding pixel along a pretilt direction of said first orientation film is set to be narrower than a width of a pixel electrode (6) corresponding to a portion of the pixel in which no reverse tilt domain is formed.

3. The liquid crystal display apparatus according to claims 1, or 2, wherein the gap between the juxtaposed pixel electrodes (6) is broadened partially in a direction orthogonal to a longitudinal direction of the reverse tilt domain (La). which molecules is continuously twisted approximately 90° between said first and second orientation films (3, 5).

4. The liquid crystal display apparatus according to claim 1, wherein said plurality of pixel electrodes (6) are laterally displaced in a staggered pattern.

5. The liquid crystal display apparatus according to claim 1. further comprising a barrier portion formed between the adjacent reverse tilt domains in order to reduce the thickness of said portion of the liquid crystal layer there.

6. The liquid crystal display apparatus according to either one of claims 1-5, wherein said liquid crystal comprises a twisted nematic liquid crystal a major axis of which molecules is continuously twisted approximately 90° between said first and second orientation films (3, 5).

7. The liquid crystal display apparatus according to either one of claims 1-6, wherein a black matrix is formed as a shadow partially at least in a periphery of each pixel portion.

8. The liquid crystal display apparatus according to either one of claims 1-7, wherein a thickness of said portion of said liquid crystal layer in the portion of the pixel is 4µm or less.

9. The liquid crystal display apparatus according to either one of claims 1-8, wherein a size of said pixel electrode (6) is 5µm²-20µm².

10. A method of manufacturing the liquid crystal display apparatus as claimed in claim 1, wherein the method of manufacturing the substrate on the side of said switching devices comprises the steps of:
(a) forming a first interlayer-insulation layer (82) on said substrate (80), forming a thin film Si layer (83) thereon for forming a transistor, forming an oxide film (84) on a surface thereof, constructing a thin film transistor by forming a gate electrode (85) and a Cs electrode (86) thereon, and further forming a second interlayer-insulation layer (87) on the thin film transistor;
(b) forming an antireflection film on the whole area of said second interlayer-insulation layer;
(c) perforating a contact hole (Ch) in said antireflection film and said second interlayer-insulation layer down through to said thin film Si layer (83);
(d) forming a first wiring layer (91) in said contact hole; and
(e) after forming a third interlayer-insulation layer (92) on the whole surface thereof and further a passivation film (93) thereon, removing the passivation film by etching from the portions of a contact hole (96) for a pixel electrode (97) and a pixel aperture, removing the third interlayer-insulation layer by etching from the portion of said contact hole (96), forming a second wiring layer (94) thereon, and either forming an organic planarization film (95) on the whole surface thereof, then perforating said contact hole (96) for a pixel electrode into the organic planarization film, and forming said pixel electrode (87) in such a pattern that a gap (1a) between reverse tilt domain portions (8) of two adjacent pixels is arranged to be broader than a minimum gap (1b) between corresponding adjacent pixel electrodes, or forming an organic planarization film (95) on the whole surface thereof such that a thickness of a portion of said liquid crystal layer located between reverse tilt domain portions of two adjacent pixels is arranged to be thinner than a portion of said liquid crystal layer in a portion of the pixel, then perforating said contact hole (96) for a pixel electrode into the organic planarization film, and then forming the pixel electrode.

## Patentansprüche

1. Flüssigkristalldisplay mit einer Flüssigkristallzelle mit:
- einem Paar von Substraten (1, 2), die einander gegenüberstehend angeordnet sind;
- einer gemeinsamen Elektrode (4), die auf einem Substrat des Paars von Substraten vorhanden ist und mit einem ersten Ausrichtungsfilm (3) bedeckt ist;
- mehreren Pixelelektroden (6), die in einer Matrix auf dem anderen Substrat des Paars von Substraten angeordnet sind und mit einem zweiten Ausrichtungsfilm (5) bedeckt sind;
- mehreren Schaltbauteilen, von denen jedes mit einer jeweiligen Pixelelektrode verbunden ist; und
- einem Flüssigkristall, der dicht zwischen dem ersten und dem zweiten Ausrichtungsfilm auf dem Paar von Substraten eingebettet ist, um eine Flüssigkristallschicht zu bilden; wobei
- ein Zwischenraum (la) zwischen Umkehrkippungsdomänenabschnitten (8) zweier benachbarter Pixel so beschaffen ist, dass er größer als ein minimaler Zwischenraum (1b) zwischen entsprechenden benachbarten Pixelelektroden ist, oder die Dicke eines Abschnitts der Flüssigkristallschicht, der zwischen Umkehrkippungsdomänenabschnitten zweier benachbarter Pixel liegt, so beschaffen ist, dass sie kleiner als die eines Abschnitts des Flüssigkristalls in einem Abschnitt des Pixels ist.

2. Flüssigkristalldisplay nach Anspruch 1, bei dem die Breite einer Pixelelektrode (6) im Umkehrkippungsdomänenabschnitt eines entsprechenden Pixels entlang einer Vorkipprichtung des ersten Ausrichtungsfilms so eingestellt ist, dass sie kleiner als die Breite einer Pixelelektrode (6) entsprechend einem Abschnitt des Pixels, in dem keine Umkehrkippungsdomäne ausgebildet ist, eingestellt ist.

3. Flüssigkristalldisplay nach Anspruch 1 oder 2, bei dem der Zwischenraum zwischen den benachbarten Pixelelektroden (6) in einer Richtung orthogonal zu einer Längsrichtung der Umkehrkippungsdomäne (La) partiell verbreitert ist.

4. Flüssigkristalldisplay nach Anspruch 1, bei dem die mehreren Pixelelektroden (6) lateral mit einem Versetzungsmuster versetzt sind.

5. Flüssigkristalldisplay nach Anspruch 1, ferner mit einem zwischen den benachbarten Umkehrkippungsdomänen ausgebildeten Barriereabschnitt, um die Dicke des dortigen Abschnitts der Flüssigkristallschicht zu verringern.

6. Flüssigkristalldisplay nach einem der Ansprüche 1-5, bei dem der Flüssigkristall über einen verdrillt-nematischen Flüssigkristall verfügt, bei dem die Hauptachse von Molekülen zwischen dem ersten und dem zweiten Ausrichtungsfilm (3, 5) kontinuierlich um ungefähr 90° verdrillt ist.

7. Flüssigkristalldisplay nach einem der Ansprüche 1-6, bei dem eine Schwarzmatrix so ausgebildet ist, dass sie zumindest an einem Umfang jedes Pixelabschnitts eine partielle Ausblendung ausführt.

8. Flüssigkristalldisplay nach einem der Ansprüche 1-7, bei dem eine Dicke des Abschnitts der Flüssigkristallschicht im Pixelabschnitt 4 µm oder weniger beträgt.

9. Flüssigkristalldisplay nach einem der Ansprüche 1-8, bei dem eine Größe der Pixelelektrode (6) 5 µm²-20 µm² beträgt.

10. Verfahren zum Herstellen des Flüssigkristalldisplays nach Anspruch 1, bei dem das Verfahren zum Herstellen des Substrats seitens der Schaltbauteile die folgenden Schritte aufweist:
(a) Herstellen einer ersten Schichtisolierschicht (82) auf dem Substrat (80), Herstellen einer Si-Dünnfilmschicht (83) darauf, um einen Transistor auszubilden, Herstellen eines Oxidfilms (84) auf einer zugehörigen Oberfläche, Aufbauen eines Dünnschichttransistors durch Ausbilden einer Gateelektrode (85) und einer Cs-Elektrode (86) darauf, und ferner Herstellen einer zweiten Schichtisolierschicht (87) auf dem Dünnschichttransistor;
(b) Herstellen eines Antireflexionsfilms auf der gesamten Fläche der zweiten Schichtisolierschicht;
(c) Ausbrechen eines Kontaktlochs (Ch) im Antireflexionsfilm und im zweiten Schichtisolierschicht bis herunter zur Si-Dünnfilmschicht (83);
(d) Herstellen einer ersten Leiterbahnschicht (91) im Kontaktloch; und
(e) nach dem Herstellen einer dritten Schichtisolierschicht (92) auf der gesamten zugehörigen Oberfläche sowie ferner eines Passivierungsfilms (93) darauf: Entfernen des Passivierungsfilms durch Ätzen aus den Abschnitten eines Kontaktlochs (96) für eine Pixelelektrode (90) und einer Pixelöffnung, Entfernen der dritten Schichtisolierschicht durch Ätzen aus dem Abschnitt des Kontaktlochs (96), Herstellen einer zweiten Leiterbahnschicht (94) darauf, und entweder Herstellen eines organischen Einebnungsfilms (95) auf der gesamten zugehörigen Oberfläche, anschließendes Ausbrechen des Kontaktlochs (96) für eine Pixelelektrode im organischen Einebnungsfilm, und Ausbilden der Pixelelektrode (97) mit einem solchen Muster, dass ein Zwischenraum (la) zwischen Umkehrkippungsdomänenabschnitten (8) zweier benachbarter Pixel so beschaffen ist, dass er größer als ein minimaler Zwischenraum (1b) zwischen entsprechenden benachbarten Pixelelektroden ist, oder Herstellen eines organischen Einebnungsfilms (95) auf der gesamten zugehörigen Oberfläche in solcher Weise, dass die Dicke eines Abschnitts einer Flüssigkristallschicht zwischen Umkehrkippungsdomänenabschnitten zweier benachbarter Pixel so beschaffen ist, dass sie kleiner als in einem Abschnitt der Flüssigkristallschicht in einem Abschnitt des Pixels ist, anschließendes Ausbrechen des Kontaktlochs (96) für eine Pixelelektrode im organischen Einebnungsfilm, und anschließendes Ausbilden der Pixelelektrode.

## Revendications

1. Appareil d'affichage à cristal liquide possédant une cellule de cristal liquide, comprenant :
deux substrats (1, 2) disposés de façon à être en regard l'un de l'autre ;
une électrode commune (4) qui est disposée sur l'un desdits deux substrats et est couverte d'une première pellicule d'orientation (3) ;
une pluralité d'électrodes de pixel (6) qui sont disposées suivant une matrice sur l'autre desdits deux substrats et sont recouvertes d'une deuxième pellicule d'orientation (5) ;
une pluralité de dispositifs de commutation, qui sont chacun respectivement connectés à une électrode de pixel ; et
un cristal liquide qui est hermétiquement enfermé entre lesdites première et deuxième pellicules d'orientation se trouvant sur lesdits deux substrats de manière à former une couche de cristal liquide ;
où il est prévu un intervalle (1a) entre parties de domaine d'inclinaison inverse (8) de deux pixels adjacents qui soit plus large qu'un intervalle minimal (1b) entre électrodes de pixel adjacentes correspondantes, ou bien il est prévu une épaisseur pour une partie de ladite couche de cristal liquide se trouvant entre des parties de domaine d'inclinaison inverse de deux pixels adjacents qui soit plus mince qu'une partie dudit cristal liquide se trouvant dans une partie du pixel.

2. Appareil d'affichage à cristal liquide selon la revendication 1, où la largeur d'une électrode de pixel (6) se trouvant au niveau de ladite partie de domaine d'inclinaison inverse d'un pixel correspondant suivant la direction de préinclinaison de ladite première pellicule d'orientation est fixée de façon à être plus étroite que la largeur d'une électrode de pixel (6) correspondant à une partie du pixel dans laquelle aucun domaine d'inclinaison inverse n'est formé.

3. Appareil d'affichage à cristal liquide selon la revendication 1 ou 2, où l'intervalle entre les électrodes de pixel (6) juxtaposées est élargi partiellement dans la direction qui est perpendiculaire à la direction longitudinale du domaine d'inclinaison inverse (La).

4. Appareil d'affichage à cristal liquide selon la revendication 1, où les électrodes de pixel (6) sont déplacées latéralement suivant un schéma étagé.

5. Appareil d'affichage à cristal liquide selon la revendication 1, comprenant en outre une partie barrière formée entre les domaines d'inclinaison inverse adjacents afin de réduire l'épaisseur de ladite partie de la couche de cristal liquide se trouvant à cet endroit.

6. Appareil d'affichage à cristal liquide selon l'une quelconque des revendications 1 à 5, où ledit cristal liquide comprend un cristal liquide nématique tel que l'axe majeur des molécules de celui-ci est torsadé en hélice de façon continue à approximativement 90° entre les première et deuxième pellicules d'orientation (3, 5).

7. Appareil d'affichage à cristal liquide selon l'une quelconque des revendications 1 à 6, où une matrice noire est formée comme un masque au moins en partie dans la périphérie de chaque partie de pixel.

8. Appareil d'affichage à cristal liquide selon l'une quelconque des revendications 1 à 7, où l'épaisseur de ladite partie de ladite couche de cristal liquide dans la partie du pixel est de 4 µm ou moins dans la partie du pixel.

9. Appareil d'affichage à cristal liquide selon l'une quelconque des revendications 1 à 8, où la taille de ladite électrode de pixel (6) est de 5 µm² à 20 µm².

10. Procédé de fabrication d'un appareil d'affichage à cristal liquide tel que défini dans la revendication 1, où le procédé de fabrication du substrat se trouvant du côté desdits dispositifs de commutation comprend les opérations suivantes :
(a) former une première couche (82) d'isolation d'intercouche sur ledit substrat (80), former sur celui-ci une couche (83) de silicium en pellicules minces afin de former un transistor, former une pellicule d'oxyde (84) sur sa surface, construire un transistor en pellicules minces en formant une électrode de grille (85) et une électrode de Cs (86) sur celle-ci, et former en outre une deuxième couche (87) d'isolation d'intercouche sur le transistor en pellicule mince ;
(b) former une pellicule antireflet sur toute l'aire de ladite deuxième couche d'isolation d'intercouche ;
(c) percer un trou de contact (Ch) dans la pellicule antireflet et la deuxième couche d'isolation d'intercouche en descendant jusqu'à travers ladite couche (83) de Si en pellicules minces ;
(d) former une première couche de câblage (81) dans ledit trou de contact ; et
(e) après formation d'une troisième couche (92) d'isolation d'intercouche sur toute sa surface et, en outre, d'une pellicule de passivation (93) sur celle-ci, retirer ladite pellicule de passivation par gravure des parties d'un trou de contact (96) relatif à une électrode de pixel (97) et une ouverture de pixel, retirer ladite troisième couche d'isolation d'intercouche par gravure de la partie dudit trou de contact (96), former une deuxième couche de câblage (94) sur celle-ci, et ou bien former une pellicule de planarisation organique (95) sur toute sa surface, puis percer ledit trou de contact (96) relatif à une électrode de pixel jusque dans la pellicule de planarisation organique et former ladite électrode de pixel (97) suivant un motif tel que l'intervalle (1a) entre des parties (8) de domaine d'inclinaison inverse de deux pixels adjacents soit disposé de manière à être plus large qu'un intervalle minimal (1b) entre électrodes de pixel adjacentes correspondantes, ou bien former une pellicule de planarisation organique (95) sur toute la surface de celui-ci de façon que l'épaisseur de la partie de ladite couche de cristal liquide se trouvant entre les parties de domaine d'inclinaison inverse de deux pixels adjacents soit prévue de manière à être plus mince que la partie de ladite couche de cristal liquide se trouvant dans une partie du pixel, puis percer ledit trou de contact (96) relatif à une électrode de pixel dans la pellicule de planarisation organique, après quoi on formera l'électrode de pixel.
